# FASCICULE DE BREVET EUROPEEN

(11) **EP 3 265 334 B1**
(45) Date de publication et mention de la délivrance du brevet: **01.05.2019**
(21) Numéro de dépôt: 16714471.6
(22) Date de dépôt: 19.02.2016
(51) Int. Cl.: B60K 28/02, B60W 40/08, G08B 21/06

(54) **DISPOSITIF ET PROCEDE DE PREDICTION D'UN NIVEAU DE VIGILANCE CHEZ UN CONDUCTEUR D'UN VEHICULE AUTOMOBILE**
VORRICHTUNG UND VERFAHREN ZUR VORHERSAGE EINER ÜBERWACHUNGSSTUFE EINES FAHRERS EINES KRAFTFAHRZEUGS
DEVICE AND METHOD FOR PREDICTING A VIGILANCE LEVEL OF A DRIVER OF A MOTOR VEHICLE

(30) Priorité: 03.03.2015 FR 1551776
(43) Date de publication de la demande: 10.01.2018
(73) Titulaire: Renault S.A.S., 92100 Boulogne-Billancourt (FR)
(72) Inventeur: ALEXANDER, Jean-Philippe, 37520 La Riche (FR); MOESSINGER, Michèle, 78280 Guyancourt (FR); BISPING, Rudolf, 45134 Essen (DE)
(86) Numéro de dépôt international: PCT/FR2016/050396
(87) Numéro de publication internationale: WO 2016/139402

(56) Documents cités:
- WO-A1-00/44580
- DE-A1-102010 007 241
- GB-A- 2 491 984
- US-B1- 7 027 621
- SANTAMARIA ET AL: "the eeg of drowsiness in normal adults", JOURNAL OF CLINICAL NEUROPHYSIOLOGY, RAVEN PRESS, NEW YORK, NY, US, vol. 4, 1 janvier 1987 (1987-01-01), pages 327-382, XP009092949, ISSN: 0736-0258, DOI: 10.1097/00004691-198710000-00002

## Description

L'invention concerne un dispositif et un procédé de prédiction d'un niveau de vigilance chez un conducteur d'un véhicule automobile.

Une application du procédé de l'invention vise en particulier à éviter l'hypovigilance chez le conducteur. L'hypovigilance correspond typiquement à la transition entre la veille et le sommeil, durant laquelle l'organisme voit ses facultés d'observation et d'analyse fortement réduites. Cette baisse du niveau de vigilance engendrée par la transition involontaire de l'état de veille vers le sommeil est responsable de nombreux accidents sur la route. Il apparaît donc essentiel de parvenir à détecter et à prévenir cet état accidentogène du conducteur afin d'améliorer sa sécurité.

Ainsi, pour maintenir un niveau d'éveil et de vigilance compatible avec l'activité de conduite, les conducteurs doivent prendre en compte leur temps de roulage et faire des pauses régulières, typiquement des pauses toutes les deux heures sont recommandées. Cependant, cette exigence vient souvent contrarier l'objectif de réaliser le trajet le plus rapidement possible. On connaît des systèmes embarqués permettant d'alerter le conducteur lorsque le temps de roulage du véhicule dépasse les deux heures, mais ces systèmes d'alerte sont en soi insuffisants et, en particulier, ne permettent pas de détecter le niveau de vigilance réel du conducteur ni d'effectuer un suivi en temps réel de l'évolution du niveau de vigilance du conducteur.

Il est connu de DE 10 2010 007241 A1 un procédé de prédiction d'un niveau de vigilance d'un conducteur, comprenant : une étape d'étalonnage, au cours de laquelle on acquiert au cours d'essais de conduite : des profils d'évolution de données électro-encéphalographiques d'un ensemble de conducteurs types entre un instant de début d'essai et un instant de fin d'essai ; des profils d'évolution de données associées aux conducteurs types ; et une étape de surveillance en temps réel du niveau de vigilance du conducteur, au cours de laquelle, de manière continue : on acquiert l'évolution de données physiologiques du conducteur ; on compare l'évolution des données du conducteur aux différents profils d'évolution de données physiologiques acquis lors de l'étape d'étalonnage, de façon à déterminer parmi ces profils, au moins un profil satisfaisant à des critères de ressemblance ; on effectue une prédiction du niveau de vigilance du conducteur à partir de l'analyse du profil de données électro-encéphalographiques acquis lors de l'étape d'étalonnage correspondant au profil d'évolution de données physiologiques ayant satisfait aux critères de ressemblance. On connaît aussi des systèmes permettant de détecter l'hypovigilance qui utilisent des informations enregistrées par électro-encéphalographie, l'analyse de l'activité cérébrale (électro-encéphalogramme ou EEG) étant en effet reconnue comme pouvant fournir un indicateur particulièrement représentatif de l'état de vigilance d'un être humain. Toutefois, si cette technique permet d'évaluer le niveau de vigilance d'une personne avec une grande précision, la caractérisation de l'EEG nécessite d'être réalisée à l'aide d'électrodes placées sur le cuir chevelu. Cette méthode semble donc peu ergonomique voire dans une certaine mesure dangereuse si elle est appliquée au conducteur en action.

On connaît encore du document de brevet américain US 8,009,051 un dispositif d'alerte pour véhicule automobile capable de déterminer un niveau de vigilance du conducteur en générant une stimulation du conducteur et en détectant la réaction du conducteur à la stimulation générée à partir d'une analyse d'un signal vidéo du conducteur fourni par une caméra embarquée dans le véhicule. A partir de différentes techniques de traitement des images et de diagnostic, le dispositif d'alerte est conçu pour détecter une réaction du conducteur à la stimulation, par exemple basée sur un mouvement prédéterminé exécuté par le conducteur tel que les clignements des yeux, des mouvements de tête ou de bouche. Toutefois, l'évolution du niveau de vigilance d'un conducteur diffère d'un individu à l'autre. Aussi, pour pouvoir adapter ce système à un ensemble de conducteurs, le conducteur doit interagir avec le système en confirmant ou en invalidant les estimations de niveau de vigilance réalisées par le système, ce qui est une source de distraction pour le conducteur et donc potentiellement une source d'accident.

L'utilisation de caméras embarquées dans le véhicule a également permis de développer des systèmes de détection du niveau de vigilance basés sur des indices visuels de la baisse de vigilance tels que les clignements des yeux, les bâillements ou la direction du regard du conducteur. Cependant, aucun système ne s'est révélé suffisamment efficace à l'heure actuelle, notamment en raison du fait que l'hypovigilance se manifeste de manière différente chez les différents individus, ce qui rend difficile la définition d'un référentiel commun pour la détection de ce phénomène.

Aussi, il existe un besoin pour un procédé de prédiction d'un niveau de vigilance chez un conducteur, capable de fournir de bonnes performances sur un ensemble de conducteurs.

A cet effet, l'invention concerne un procédé de prédiction d'un niveau de vigilance d'un conducteur, comprenant :
une étape d'étalonnage, au cours de laquelle on acquiert simultanément, au cours d'essais de conduite :
des profils d'évolution de données électro-encéphalographiques d'un ensemble de conducteurs types entre un instant de début d'essai où ils sont dans un état d'éveil normal et un instant de fin d'essai où ils sont dans un état d'hypovigilance ;
des profils d'évolution de données physiologiques associées aux conducteurs types au moyen d'une caméra ; et
une étape de surveillance en temps réel du niveau de vigilance du conducteur, au cours de laquelle, de manière continue :
   on acquiert l'évolution de données physiologiques du conducteur au moyen d'une caméra ;
   on compare l'évolution des données physiologiques du conducteur aux différents profils d'évolution de données physiologiques acquis lors de l'étape d'étalonnage, de façon à déterminer parmi ces profils, au moins un profil satisfaisant à des critères de ressemblance ;
   on effectue une prédiction statistique de l'évolution du niveau de vigilance du conducteur à partir de l'analyse du profil de données électro-encéphalographiques acquis lors de l'étape d'étalonnage correspondant au profil d'évolution de données physiologiques ayant satisfait aux critères de ressemblance.

L'avantage de cette méthode, en plus d'un bon taux de détection des états d'hypovigilance, est qu'elle n'a pas besoin d'être adaptée ou entraînée. On constate avantageusement que cette méthode ne nécessite pas d'apprentissage sur le conducteur.

Avantageusement, la prédiction statistique de l'évolution du niveau de vigilance comprend le calcul d'un score probable de vigilance du conducteur apte à définir son niveau de vigilance sur une échelle continue bornée entre une valeur représentative d'un état d'éveil normal ou très éveillé et une valeur représentative d'un état d'hypovigilance ou d'endormissement.

De préférence, le procédé peut comprendre une étape de génération d'un signal d'alerte en cas d'évolution brusque du score probable de vigilance du conducteur.

Avantageusement, le procédé comprend une étape de fourniture d'une caméra haute définition agencée pour filmer au moins le visage du conducteur en situation de conduite et d'une pluralité de LEDs infrarouge destinées à éclairer le champ de la caméra.

De préférence, le procédé comprend une étape de traitement des images acquises par la caméra comprenant un calcul en temps réel des données physiologiques associées au conducteur propres à caractériser au moins les clignements des yeux et/ou les bâillements et/ou la position et le mouvement de la tête du conducteur.

Selon un mode de réalisation, le calcul en temps réel des données physiologiques associées au conducteur comprend la détermination des paramètres de fréquence, de vitesse, d'accélération, et de durée d'ouverture et de fermeture des paupières du conducteur, des paramètres de fréquence des bâillements et de durée d'ouverture et de fermeture de la bouche lors des bâillements, ainsi que des paramètres de position et de mouvement de la tête du conducteur selon trois axes X, Y et Z.

Avantageusement, le procédé peut comprendre une étape de personnalisation de la prédiction statistique comprenant la transmission à intervalles réguliers vers le conducteur d'une requête en déclaration de son niveau de vigilance estimé par lui et la réception du niveau de vigilance estimé tel que déclaré par le conducteur.

L'invention concerne également un dispositif de prédiction d'un niveau de vigilance d'un conducteur caractérisé en ce qu'il comprend une caméra propre à acquérir des images du conducteur, un module de traitement d'images propre à caractériser, à partir des images acquises, des données physiologiques du conducteur, des moyens de mémorisation d'une base de données stockant des profils d'évolution de données électro-encéphalographiques et de données physiologiques acquis de manière synchronisée au cours d'essais de conduite, lors d'une phase d'étalonnage, d'un ensemble de conducteurs types mis en situation de conduite entre un instant de début d'essai où ils sont dans un état d'éveil normal et un instant de fin d'essai où ils sont dans un état d'hypovigilance, et un module de détection adapté à comparer l'évolution des données physiologiques du conducteur aux profils d'évolution de données physiologiques stockées dans la base de données de façon à déterminer parmi ces profils, au moins un profil satisfaisant à des critères de ressemblance et à effectuer une prédiction statistique de l'évolution du niveau de vigilance du conducteur à partir de l'analyse du profil de données électro-encéphalographiques stocké dans la base de données correspondant au profil d'évolution de données physiologiques ayant satisfait aux critères de ressemblance.

Avantageusement, le dispositif comprend une interface de communication adaptée pour communiquer avec des moyens de restitution de la prédiction statistique de l'évolution du niveau de vigilance du conducteur test.

De préférence, les moyens de restitution comprennent une interface homme-machine agencée au niveau d'un terminal mobile.

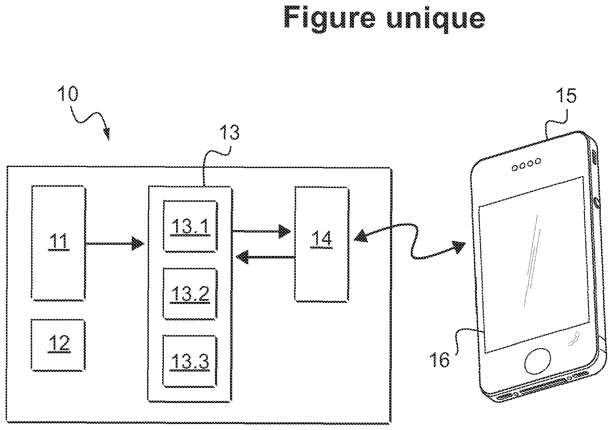

D'autres particularités et avantages de l'invention ressortiront à la lecture de la description faite ci-après d'un mode de réalisation particulier de l'invention, donné à titre indicatif mais non limitatif, en référence à la figure unique annexée illustrant schématiquement un dispositif de détection du niveau de vigilance d'un conducteur conforme à l'invention.

La figure unique illustre schématiquement un dispositif 10 de prédiction de l'état de vigilance d'un conducteur, destiné à être agencé dans un véhicule. Suivant la configuration illustrée sur la figure, le dispositif de prédiction 10 comprend une caméra 11, prévue pour être montée dans le véhicule, orientée face au conducteur, et destinée à acquérir des images vidéo du conducteur du véhicule, en particulier des images vidéo de la partie du conducteur située au-dessus du buste du conducteur, incluant notamment sa tête. La caméra 11 utilisée est préférentiellement une caméra haute définition, filmant en continu une image en noir et blanc. De préférence, le champ de la caméra 11 est éclairé par plusieurs sources lumineuses de type LEDs infra-rouge 12, synchronisées avec la caméra haute définition et disposées de part et d'autre de la caméra 11. Ces LEDs permettent ainsi à la caméra de pouvoir filmer des images de qualité en éliminant les reflets et les grandes variations de contraste du fait des fortes variations de l'ambiance lumineuse en situation de conduite sur route.

Le dispositif 10 comprend une unité de traitement 13, comprenant un module de traitement d'images 13.1 conçu pour traiter les images acquises par la caméra 11 au moyen d'un algorithme de traitement d'image. Cet algorithme est conçu pour détecter en temps réel dans les images acquises des données physiologiques du conducteur, qui concernent le comportement visuel du conducteur et propres à caractériser préférentiellement au moins les clignements des yeux et/ou les bâillements et/ou la position et le mouvement de la tête du conducteur test. En particulier, selon un mode de réalisation, l'algorithme de traitement des images 13.1 est conçu pour calculer en temps réel des paramètres de fréquence, de vitesse, d'accélération, et de durée d'ouverture et de fermeture des paupières du conducteur, des paramètres de fréquence des bâillements et de durée d'ouverture et de fermeture de la bouche lors des bâillements, ainsi que des paramètres de position et de mouvement de la tête du conducteur selon les trois axes X, Y et Z. Une caractérisation de ces différents paramètres est possible à partir de l'analyse du signal vidéo du visage du conducteur fourni par la caméra haute définition. Nous ne détaillerons pas ici les différentes techniques connues de détection de visages ou des yeux mises en oeuvre pour le calcul desdits paramètres mais l'homme du métier pourra se reporter utilement à la littérature existante à ce sujet.

La caractérisation de ces paramètres permet ainsi d'effectuer un suivi temps réel de l'évolution des données physiologiques du conducteur révélatrices de son comportement visuel lors de la conduite du véhicule. Ces paramètres ainsi calculés par l'algorithme de traitement d'image 13.1 sont fournis en temps réel à un module de détection 13.2 conçus pour déterminer un niveau de vigilance du conducteur au moyen d'un algorithme de détection statistique.

Cette détection du niveau de vigilance du conducteur est réalisée à partir d'une base de données de conduite comprenant des enregistrements vidéo et d'électro-encéphalographie synchronisés d'un ensemble, par exemple plusieurs centaines, de conducteurs types ou dits encore conducteurs d'étalonnage. Plus précisément, lors d'une phase d'étalonnage, il est réalisé sur cet ensemble de conducteurs types, au cours d'essais de conduite, une campagne d'acquisition de données contenant des enregistrements d'électro-encéphalographie et vidéo synchronisés de cet ensemble de conducteurs types mis en situation de conduite entre un instant de début d'essai où ils sont dans un état d'éveil normal et un instant de fin d'essai où ils sont dans un état d'hypovigilance. Ainsi, au cours de ces essais de conduite en condition d'éveil évoluant vers des conditions d'hypovigilance, tous les conducteurs types portent des électrodes placées sur leur cuir chevelu, de façon à acquérir des profils d'évolution de données électro-encéphalographiques de ces conducteurs. Les conducteur types sont en outre filmés, par exemple au moyen d'une caméra haute définition, au cours de ces essais de conduite, de façon à acquérir simultanément des profils d'évolution de données physiologiques associées aux conducteurs types, qui concernent le comportement visuel de ces conducteurs types et qui peuvent être caractérisées suivant le mode de réalisation décrit plus haut en référence au module de traitement des images 13.1 par des paramètres de fréquence, de vitesse, d'accélération, et de durée d'ouverture et de fermeture des paupières du conducteur, des paramètres de fréquence des bâillements et de durée d'ouverture et de fermeture de la bouche lors des bâillements, ainsi que par des paramètres de position et de mouvement de la tête du conducteur selon les trois axes X, Y et Z.

Ainsi, chaque enregistrement de la base de données de conduite comprend, pour chaque conducteur type ayant été mis en situation de conduite entre un instant de début de conduite en état d'éveil normal et un instant de fin de conduite en état d'hypovigilance, un profil d'évolution de données électro-encéphalographiques et une séquence vidéo, tous deux acquis de manière synchronisée, la séquence vidéo permettant de caractériser un profil d'évolution du comportement visuel du conducteur type concerné suivant les paramètres de données physiologiques énoncées précédemment.

Le module de détection 13.2 exploite alors un algorithme de prédiction statistique construit à partir de l'analyse conjointe des données physiologiques et des données électro-encéphalographiques acquises au cours des essais de conduite et stockées dans la base de données de conduite. Grâce à la comparaison des profils d'évolution des données physiologiques avec les profils d'évolution des données électro-encéphalographiques, l'algorithme de prédiction statistique est à même de déterminer plusieurs modèles de prédiction statistique d'un niveau de vigilance en fonction de l'évolution des données physiologiques acquises au cours des essais de conduite sur les conducteurs types. Plus précisément, au cours d'une phase de surveillance d'un conducteur, durant laquelle le comportement visuel de ce conducteur est filmé par la caméra 11, le module de détection statistique 13.2 est conçu pour comparer en temps réel l'évolution des paramètres de données physiologiques concernant le comportement visuel de ce conducteur recueillis au moyen du module de traitement des images 13.1 comme expliqué précédemment, avec les différents profils d'évolution de données physiologiques préalablement enregistrés dans la base de données de conduite pendant la phase d'étalonnage du dispositif, de manière à déterminer parmi ces profils enregistrés, celui ou ceux satisfaisant à des critères de ressemblance. Le module 13.2 applique alors un modèle de prédiction statistique pour effectuer une prédiction statistique du niveau de vigilance du conducteur à partir de l'analyse des profils de données électro-encéphalographiques stockés dans la base de données correspondant aux profils d'évolution des données physiologiques ayant satisfait aux critères de ressemblance. L'algorithme de prédiction statistique est conçu pour calculer un score probable de vigilance du conducteur, qui permet de définir le niveau de vigilance du conducteur sur une échelle continue bornée entre une valeur représentative d'un état d'éveil normal ou très éveillé (hypervigilance) et une valeur représentative d'un état d'hypovigilance ou d'endormissement. Par exemple, le score probable de vigilance du conducteur est donné sur une échelle continue de 0, correspondant à un état d'hypovigilance, à 100, correspondant à un état d'hypervigilance.

L'unité de traitement 13 du dispositif de détection 10 comprend encore un module 13.3 de détection d'alerte sur la base du score probable de vigilance du conducteur tel qu'établi par le module de détection statistique 13.2, permettant de générer un signal d'alerte à destination du conducteur en cas d'évolution brusque du score probable de vigilance du conducteur, en particulier lorsque ce score diminue brusquement.

Le dispositif de prédiction 10 comprend une interface de communication 14 sans fil, notamment de type Bluetooth ou WiFi, ou filaire, apte à communiquer avec un terminal mobile 15, notamment de type smartphone ou tablette, sur lequel est installée une application logicielle dédiée à la lecture et/ou la gestion du niveau de vigilance. Le terminal mobile 15 comporte une interface homme-machine telle que par exemple un écran tactile 16 permettant la restitution du score probable de vigilance au conducteur. Il comporte également un module de communication lui permettant d'échanger des données avec l'interface de communication 14 du dispositif de prédiction 10. Ainsi, le dispositif de détection est apte à envoyer le score probable de vigilance du conducteur qui a été estimé au terminal mobile 15 via l'interface de communication 14 et le terminal mobile 15 est apte à commander l'affichage de ce score sur l'écran 16 du terminal mobile 15 via l'application logicielle dédiée. Ainsi, l'interface homme-machine du terminal mobile permet au conducteur d'être informé en temps réel de son niveau de vigilance estimé par le dispositif de prédiction 10.

L'interface homme-machine du terminal mobile peut également être utilisée afin de questionner le conducteur sur son propre ressenti concernant son niveau de vigilance, de manière régulière, mais également lors des franchissements estimés de niveau de vigilance, par exemple parmi les niveaux suivants : très éveillé, normal, fatigué, très fatigué. Le conducteur peut ainsi être amené, via l'interface homme-machine, à confirmer ou au contraire invalider ces franchissements de niveau de vigilance, de manière à améliorer les performances de l'algorithme de prédiction statistique quant à la détection personnalisée du niveau de vigilance. Ainsi, avec le temps et l'usage, l'algorithme de prédiction évolue d'un algorithme global basé sur une analyse multi-profils d'un ensemble de conducteurs type vers un algorithme personnalisé.

## Revendications

1. Procédé de prédiction d'un niveau de vigilance d'un conducteur, comprenant :
une étape d'étalonnage, au cours de laquelle on acquiert simultanément au cours d'essais de conduite :
des profils d'évolution de données électro-encéphalographiques d'un ensemble de conducteurs types entre un instant de début d'essai où ils sont dans un état d'éveil normal et un instant de fin d'essai où ils sont dans un état d'hypovigilance ;
des profils d'évolution de données physiologiques associées aux conducteurs types au moyen d'une caméra ; et
une étape de surveillance en temps réel du niveau de vigilance du conducteur, au cours de laquelle, de manière continue :
on acquiert l'évolution de données physiologiques du conducteur au moyen d'une caméra (11);
on compare l'évolution des données physiologiques du conducteur aux différents profils d'évolution de données physiologiques acquis lors de l'étape d'étalonnage, de façon à déterminer parmi ces profils, au moins un profil satisfaisant à des critères de ressemblance ;
on effectue une prédiction statistique de l'évolution du niveau de vigilance du conducteur à partir de l'analyse du profil de données électro-encéphalographiques acquis lors de l'étape d'étalonnage correspondant au profil d'évolution de données physiologiques ayant satisfait aux critères de ressemblance.

2. Procédé selon la revendication 1, **caractérisé en ce que** la prédiction statistique de l'évolution du niveau de vigilance comprend le calcul d'un score probable de vigilance du conducteur apte à définir son niveau de vigilance sur une échelle continue bornée entre une valeur représentative d'un état d'éveil normal ou très éveillé et une valeur représentative d'un état d'hypovigilance ou d'endormissement.

3. Procédé selon la revendication 2, **caractérisé en ce qu'**il comprend une étape de génération d'un signal d'alerte en cas d'évolution brusque du score probable de vigilance du conducteur.

4. Procédé selon l'une quelconque des revendications précédentes, **caractérisé en ce qu'**il comprend une étape de fourniture d'une caméra (11) haute définition agencée pour filmer au moins le visage du conducteur en situation de conduite et d'une pluralité de LEDs infrarouge (12) destinées à éclairer le champ de la caméra.

5. Procédé selon l'une quelconque des revendications précédentes **caractérisé en ce qu'**il comprend une étape de traitement des images acquises par la caméra (11) comprenant un calcul en temps réel des données physiologiques associées au conducteur propres à caractériser au moins les clignements des yeux et/ou les bâillements et/ou la position et le mouvement de la tête du conducteur test.

6. Procédé selon la revendication 5, **caractérisé en ce que** le calcul en temps réel des données physiologiques associées au conducteur comprend la détermination des paramètres de fréquence, de vitesse, d'accélération, et de durée d'ouverture et de fermeture des paupières du conducteur, des paramètres de fréquence des bâillements et de durée d'ouverture et de fermeture de la bouche lors des bâillements, ainsi que des paramètres de position et de mouvement de la tête du conducteur selon trois axes X, Y et Z.

7. Procédé selon l'une quelconque des revendications précédentes, **caractérisé en ce qu'**il comprend une étape de personnalisation de la prédiction statistique comprenant la transmission à intervalles réguliers vers le conducteur d'une requête en déclaration de son niveau de vigilance estimé par lui et la réception du niveau de vigilance estimé tel que déclaré par le conducteur.

8. Dispositif de prédiction (10) d'un niveau de vigilance d'un conducteur comprenant une caméra (11) propre à acquérir des images du conducteur, un module de traitement d'images (13.1) propre à caractériser, à partir des images acquises, des données physiologiques du conducteur, des moyens de mémorisation d'une base de données stockant des profils d'évolution de données électro-encéphalographiques et de données physiologiques acquis de manière synchronisée au cours d'essais de conduite, lors d'une phase d'étalonnage, d'un ensemble de conducteurs types mis en situation de conduite entre un instant de début d'essai où ils sont dans un état d'éveil normal et un instant de fin d'essai où ils sont dans un état d'hypovigilance, et un module de détection (13.2) adapté à comparer l'évolution des données physiologiques du conducteur aux profils d'évolution de données physiologiques stockées dans la base de données de façon à déterminer parmi ces profils, au moins un profil satisfaisant à des critères de ressemblance et à effectuer une prédiction statistique de l'évolution du niveau de vigilance du conducteur à partir de l'analyse du profil de données électro-encéphalographiques stocké dans la base de données correspondant au profil d'évolution de données physiologiques ayant satisfait aux critères de ressemblance.

9. Dispositif de détection selon la revendication 8, **caractérisé en ce qu'**il comprend une interface de communication (14) adaptée pour communiquer avec des moyens de restitution (15) de la prédiction statistique de l'évolution du niveau de vigilance du conducteur.

10. Dispositif selon la revendication 9, **caractérisé en ce que** les moyens de restitution comprennent une interface homme-machine (16) agencée au niveau d'un terminal mobile.

## Patentansprüche

1. Verfahren zur Vorhersage eines Wachsamkeitsniveaus eines Fahrers, umfassend:
einen Schritt des Kalibrierens, im Laufe wessen im Zuge von Fahrversuchen Folgendes simultan erfasst wird:
Entwicklungsprofile elektroenzephalographischer Daten einer Gesamtheit von typischen Fahrern zwischen einem Zeitpunkt eines Versuchsanfangs, wo sie sich in einem normalen Wachzustand befinden, und einem Zeitpunkt eines Versuchsendes, wo sie sich in einem Zustand verminderter Wachsamkeit befinden;
Entwicklungsprofile physiologischer Daten, die mit den typischen Fahrern in Verbindung stehen, mittels einer Kamera; und
einen Schritt des Überwachens des Wachsamkeitsniveaus des Fahrers in Echtzeit, im Laufe wessen fortlaufend:
die Entwicklung physiologischer Daten des Fahrers mittels einer Kamera (11) erfasst wird;
die Entwicklung der physiologischen Daten des Fahrers mit den verschiedenen Entwicklungsprofilen physiologischer Daten verglichen wird, die beim Schritt des Kalibrierens erfasst werden, um unter diesen Profilen mindestens ein Profil zu bestimmen, das Ähnlichkeitskriterien erfüllt;
eine statistische Vorhersage der Entwicklung des Wachsamkeitsniveaus des Fahrers auf Grundlage der Analyse des Profils elektroenzephalographischer Daten durchgeführt wird, das beim Schritt des Kalibrierens erfasst wird, das dem Entwicklungsprofil physiologischer Daten entspricht, das die Ähnlichkeitskriterien erfüllt hat.

2. Verfahren nach Anspruch 1, **dadurch gekennzeichnet, dass** die statistische Vorhersage der Entwicklung des Wachsamkeitsniveaus das Berechnen eines wahrscheinlichen Wachsamkeits-Scores des Fahrers umfasst, der geeignet ist, sein Wachsamkeitsniveau auf einer durchgehenden Skala zu definieren, die zwischen einem Wert, der für einen normalen oder sehr wachen Wachzustand repräsentativ ist, und einem Wert, der für einen Zustand verminderter Wachsamkeit oder des Einschlafens repräsentativ ist, begrenzt ist.

3. Verfahren nach Anspruch 2, **dadurch gekennzeichnet, dass** es einen Schritt des Erzeugens eines Warnsignals im Falle einer plötzlichen Entwicklung des wahrscheinlichen Wachsamkeits-Scores des Fahrers umfasst.

4. Verfahren nach einem der vorhergehenden Ansprüche, **dadurch gekennzeichnet, dass** es einen Schritt des Vorsehens einer Kamera (11) hoher Auflösung, die angeordnet ist, zumindest das Gesicht des Fahrers in einer Fahrsituation zu filmen, und einer Mehrzahl von Infrarot-LEDs (12), die dazu bestimmt sind, das Feld der Kamera zu beleuchten, umfasst.

5. Verfahren nach einem der vorhergehenden Ansprüche, **dadurch gekennzeichnet, dass** es einen Schritt des Bearbeitens der Bilder umfasst, die von der Kamera (11) erfasst werden, umfassend ein Berechnen in Echtzeit der physiologischen Daten, die mit dem Fahrer in Verbindung stehen, die geeignet sind, zumindest die Augenlidschläge und/oder das Gähnen und/oder die Position und die Bewegung des Kopfes des Testfahrers kennzeichnen.

6. Verfahren nach Anspruch 5, **dadurch gekennzeichnet, dass** das Berechnen in Echtzeit der physiologischen Daten, die mit dem Fahrer in Verbindung stehen, das Bestimmen der Parameter einer Häufigkeit, Geschwindigkeit, Beschleunigung und Öffnungs- und Schließdauer der Augenlider des Fahrers, der Parameter einer Häufigkeit des Gähnens und der Öffnungs- und Schließdauer des Mundes beim Gähnen sowie Parameter einer Position und Bewegung des Kopfes des Fahrers entlang drei Achsen X, Y und Z umfasst.

7. Verfahren nach einem der vorhergehenden Ansprüche, **dadurch gekennzeichnet, dass** es einen Schritt des Personalisierens der statistischen Vorhersage umfasst, umfassend das Übertragen an den Fahrer, in regelmäßigen Abständen, einer Anforderung einer Erklärung seines von ihm geschätzten Wachsamkeitsniveaus und das Empfangen des geschätzten Wachsamkeitsniveaus, so wie es vom Fahrer erklärt wird.

8. Vorrichtung zur Vorhersage (10) eines Wachsamkeitsniveaus eines Fahrers, umfassend eine Kamera (11), die geeignet ist, Bilder des Fahrers zu erfassen, ein Modul zu Bearbeitung von Bildern (13.1), das geeignet ist, auf Grundlage der erfassten Bilder physiologische Daten des Fahrers zu charakterisieren, Mittel zur Speicherung einer Datenbank, die Entwicklungsprofile elektroenzephalographischer Daten und physiologischer Daten einer Gesamtheit von typischen Fahrern, die in eine Fahrsituation versetzt sind, die zwischen einem Zeitpunkt eines Versuchsanfangs, wo sie sich in einem normalen Wachzustand befinden, und einem Zeitpunkt eines Versuchsendes, wo sie sich in einem Zustand verminderter Wachsamkeit befinden, im Zuge von Fahrversuchen in einer Phase des Kalibrierens synchron erfasst werden, speichert, und ein Detektionsmodul (13.2), das geeignet ist, die Entwicklung der physiologischen Daten des Fahrers mit den Entwicklungsprofilen physiologischer Daten zu vergleichen, die in der Datenbank gespeichert sind, um unter diesen Profilen mindestens ein Profil zu bestimmen, das Ähnlichkeitskriterien erfüllt, und eine statistische Vorhersage der Entwicklung des Wachsamkeitsniveaus des Fahrers auf Grundlage der Analyse des Profils elektroenzephalographischer Daten durchzuführen, das dem Entwicklungsprofil physiologischer Daten entspricht, das die Ähnlichkeitskriterien erfüllt hat.

9. Detektionsvorrichtung nach Anspruch 8, **dadurch gekennzeichnet, dass** sie eine Kommunikationsschnittstelle (14) umfasst, die geeignet ist, mit Mitteln zur Rückgabe (15) der statistischen Vorhersage der Entwicklung des Wachsamkeitsniveaus des Fahrers zu kommunizieren.

10. Vorrichtung nach Anspruch 9, **dadurch gekennzeichnet, dass** die Mittel zur Rückgabe eine Mensch-Maschine-Schnittstelle (16) umfassen, die an einem mobilen Endgerät angeordnet ist.

## Claims

1. Method for predicting a vigilance level of a driver, comprising:
a calibration step, during which there is simultaneously acquired during driving tests:
profiles of the change in electroencephalographic data of a set of standard drivers between a start of test time when they are in a normal state of wakefulness and an end of test time when they are in a state of hypovigilance;
profiles of the change in physiological data associated with the standard drivers by means of a camera; and
a step of real time monitoring of the vigilance level of the driver, during which, continuously: the change in physiological data of the driver
is acquired by means of a camera (11);
the change in physiological data of the driver is compared with the different profiles of change in physiological data acquired during the calibration step, in order to determine, from among these profiles, at least one profile satisfying resemblance criteria;
a statistical prediction of the change in vigilance level of the driver is carried out on the basis of the analysis of the profile of electroencephalographic data acquired during the calibration step corresponding to the profile of change in physiological data having satisfied the resemblance criteria.

2. Method according to Claim 1, **characterized in that** the statistical prediction of the change in vigilance level comprises the computation of a probable vigilance rating of the driver suitable for defining his vigilance level on a continuous scale ranging between a value representative of a normal wakefulness or very awake state and a value representative of a hypovigilance or falling asleep state.

3. Method according to Claim 2, **characterized in that** it comprises a step of generating a warning signal in the case of a sudden change in the probable vigilance rating of the driver.

4. Method according to any one of the preceding claims, **characterized in that** it comprises a step of providing a high-definition camera (11) arranged for filming at least the face of the driver in a driving situation and a plurality of infrared LEDs (12) intended to illuminate the field of view of the camera.

5. Method according to any one of the preceding claims, **characterized in that** it comprises a step of processing the images acquired by the camera (11) comprising a real time computation of the physiological data associated with the driver suitable for characterizing at least the blinking of the driver's eyes and/or his yawns and/or the position and movement of the test driver's head.

6. Method according to Claim 5, **characterized in that** the real time computation of the physiological data associated with the driver comprises the determination of the parameters of frequency, speed, acceleration and duration of the opening and closing of the driver's eyelids, the parameters of frequency of the yawns and of the duration of opening and closing of the mouth during yawns, and the parameters of position and movement of the driver's head along three axes X, Y and Z.

7. Method according to any one of the preceding claims, **characterized in that** it comprises a step of personalizing the statistical prediction comprising the transmission to the driver at regular intervals of a request for a declaration of his vigilance level estimated by himself and the reception of the estimated vigilance level as declared by the driver.

8. Device (10) for predicting a vigilance level of a driver, **characterized in that** it comprises a camera (11) able to acquire images of the driver, an image processing module (13.1) suitable for characterizing, on the basis of the acquired images, physiological data of the driver, means of storage in a database storing profiles of change in electroencephalographic data and physiological data acquired in a synchronized manner in the course of driving tests, during a calibration phase, of a set of standard drivers placed in a driving situation between a start of test time when they are in a normal state of wakefulness and an end of test time when they are in a state of hypovigilance, and a detection module (13.2) able to compare the change in the physiological data of the driver with the profiles of change in physiological data stored in the database in order to determine, from among these profiles, at least one profile satisfying resemblance criteria and to carry out a statistical prediction of the change in the vigilance level of the driver on the basis of the analysis of the profile of electroencephalographic data stored in the database corresponding to the profile of change in physiological data having satisfied the resemblance criteria.

9. Detection device according to Claim 8, **characterized in that** it comprises a communication interface (14) suitable for communicating with means of retrieval (15) of the statistical prediction of the change in the vigilance level of the driver.

10. Device according to Claim 9, **characterized in that** the retrieval means comprise a man-machine interface (16) arranged at the level of a mobile terminal.
